Europäisches Patentamt

European Patent Office

Office européen des brevets

(11) Publication number: **0 488 074 A1**

# EUROPEAN PATENT APPLICATION

(21) Application number: **91119940.4**

(22) Date of filing: **23.11.91**

(51) Int. Cl.5: **H02G 11/02**, **B65H 75/44**, **A47L 9/26**

(30) Priority: **30.11.90 IT 295990**

(43) Date of publication of application:
**03.06.92 Bulletin 92/23**

(84) Designated Contracting States:
**AT BE CH DE DK ES FR GB GR LI LU NL SE**

(71) Applicant: **S.T.E.M. S.R.L.**
**Via G.Guido Paglia 27**
**I-24100 Bergamo(IT)**

(72) Inventor: **Carretto, Emanuel**
**via G. e G. Paglia, 27**
**I-24100 Bergamo(IT)**

(74) Representative: **Lecce, Giovanni**
**STUDIO NORD BREVETTI Via Suardi, 4**
**I-24100 Bergamo(IT)**

(54) **Automatic continuous cable winder for household appliances.**

(57) The subject cable-winder exercises winding action upon an electrical cable not interrupted by sliding contacts. Starting from the user plug extremity, the cable is coiled over an automatic reel utilising the energy stored in a spring preloaded by a previous forceful unwinding.

The spring is kept loaded by a friction sensitive mechanism which, through a first area on the circumference of a roller captive in a slot, acts on a cylindrical attritional surface with a movement essentially parallel to the cylindrical surface itself. The roller pivot is held in the slot of a lever hinged about a reference fixed structure, consisting of an inclined plane upon which comes to rest, with a wedging action, a second area of the roller's circumference. Movement to the roller is provided by the return action of a spring housed in the reel which acts on the lever.

Fig.1

The invention concerns on automatic cable winder particularly suited for applications on household electrical appliances. High energy consumption electrical appliances require a cable to connect them to the mains power supply. Typical examples of such appliances are vacuum cleaners, polishers, irons, domestic steam generators and similar equipment.

Usually such appliances are provided with a long electrical cable that often must be manually wound around storage hooks. For greater convenience, some electrical appliances are provided with automatic cable-winders that rely upon spring operated reels which retrieve the cable fully, leaving the male power plug outside the structure.

Such system of winding cables on a rotating reel can only be realised following one of two design approaches:

1 - a centrally mounted socket is fitted on and rotates with the reel, the rotation of which releases or gathers the cable leaving free only the terminating mole plug,

2 - the winding reel is mode to turn leaving stationary the socket, mounted at the other extremity of the cable. Sliding electrical contacts are adopted.

Although the first design approach offers the advantage of a continuous electrical cable which is economical and reliable it also presents the drawback that the cable-winding device can not be included in the appliance as the captive end of the cable (the socket end) would cause the cable to twist and kink.

The second approach allows the integration of the winding mechanism into the electrical appliance but offers the typical disadvantages encountered with sliding contacts, such as decreased electrical continuity with time, high manufacturing costs and wear caused by sparking.

First purpose of the subject invention is to define a cable winding mechanism that can be housed in a fixed structure, such as the one of electrical household appliances, without resorting to sliding contacts and thus realising the electrical connection from the mains supply plug to the user load via a continuous electrically uninterrupted cable.

A second purpose of the subject invention is to define a cable winding mechanism possessing automatic return features, control features and of high reliability.

These and other purposes will result as achieved by reading the following detailed description of a cable winding mechanism particularly suited for household electrical appliances which utilises a continuous cable not interrupted by sliding contacts and winds onto a reel as from the user plug. Rewinding onto the reel occurs automatically through the action of a spring that becomes loaded by a previous forced unwinding and released by a plunger device. The spring is kept under tension by means of a friction sensitive blocking system which utilises a portion of the circumference of a roller which comes to bear onto a cylindrical surface. The roller, which moves in a slot realised in a lever pivoting on a fixed reference structure, follows a path practically parallel to the said cylindrical surface. The reference structure consists of an inclined plane upon which a second portion of the roller circumference comes to bear with a self-wedging action determined by the force exerted by the spring loaded reel. The force is applied through the lever. A plunger is provided to release the wedging force by lifting the extremity of the lever supporting the roller by causing it to rotate into its slot and roll over the inclined plane.

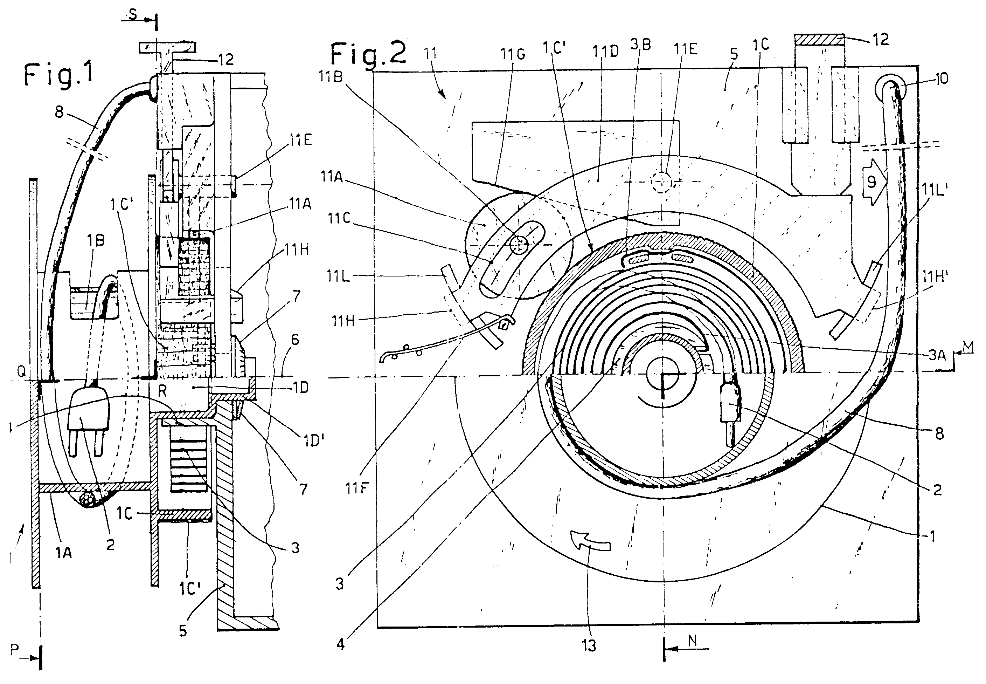

From what mentioned the inventive concept can be identified as starting the winding of the cable from its terminal extremity (plug) instead from its initial extremity (socket). The invention is illustrated purely for reference and not restrictive purposes through the attached drawings consisting of Fig. 1 and Fig. 2, representing two sectional views of the drawing, as seen from the direction of arrows PQRS and NM. With reference to the mentioned Figs. 1 and 2, a reel 1 is provided with slot 1B through which plug 2 (shown as plug but could also be a socket) is introduced. In this way it results withheld inside the reel 1 when the reel is made to turn under the action exercised by a normal leaf spring 3 wound on an axis. The extremities of the spring are held fast on the following structures: extremity 3A on fixed collar 4 integral to plate 5, which can be considered as being part of the appliance or any other body, if the cable-winder is a self-standing device. The other extremity 3B of the spring is anchored inside the cylindrical rim 1C of reel 1. Reel 1 rotates around axis 6 of shaft 1D - 1D running in antifriction housings integral to the structure 5. As can be seen in the drawing, the housings are shown inside the fixed collar 4. Shaft 1D - 1D' is retained axially by standard means: notice spring washer 7 biting on the outside of shaft 1D or another type of thrust washer acting on the fixed structure 5. A friction sensitive mechanism operates on the outside of cylindrical rim 10 to keep the reel 1 in the angular position reached as result of the unwinding action of cable 8. Such unwinding action is determined by pulling the cable by hand in the direction shown by arrow 9 and occurs together with extremity 10 (basically the socket) of the cable secured mechanically to structure 5 and therefore not part of electrical connections inside the appliance. Traction towards 9 determines the forceful unwinding of cable 8 from its reel 1 with total traction freeing plug 2 from its housing inside the hub 1A. During its total unwinding, the cable has caused reel 1 to complete several revolutions together with cylindrical rim 1C, causing the spring 3 to wind up. The condition of wound spring is maintained by the friction sensitive mechanism 11.

Pressure on plunger 12 causes the friction sensitive mechanism 11 to disengage, so that the unwinding of spring 3 returns reel 1 in the direction of rotation shown by arrow 13, allowing cable 8 (previously secured by means of the plug 2 to the hollow of slot 1B) to be rewound again around the central hub 1A. The friction sensitive mechanism 11, the operation of which can be compared to a toothless ratchet system, relies on the self-wedging concept adopted for free-wheeling operation, but embodies the adaptations necessary for the operation of such a device as considered by the invention, which requires a plunger operated release system. Said friction sensitive mechanism is structured in the following way: a roller 11A is mounted on pivot 11B captive but free to slide within slot 11C machined on a first class lever 11D. Lever 11D has its turning moment about pin 11E located on fixed structure 5 and is moved elastically towards the frictional surface 11C' by small spring 11F with the aim of keeping roller 11A in contact with said surface 11C'. When reel 1 rotates in the direction of 13 it imports movement to roller 11A causing it to move along slot 11C and to come in contact with the fixed plane 11G, the inclination of which has been suitably determined to cause roller 11A to wedge between it and the outside surface 1C' of the cylindrical rim 1C. Friction generated between roller 11A and inclined plane 11G prevents the roller front rotating and also prevents the rotation of the cylindrical rim 1C and consequently of the reel 1. Pressure on plunger 12 transfers force to the opposite extremity of lever 11D, causing the separation of surface 10' of cylindrical rim 1C from roller 11A. Under these conditions the reel can rotate freely under the force exerted by the previously loaded spring 3 and now being wound. The mechanical structure has lever 11D held onto structure 5 by spring assisted pawls 11H and 11H' allowed to slide freely in their slots 11L and 11L' which result as being concentric to pin 11E.

**Claims**

1. Cable-winder, specifically intended for electrical household appliances, consists of a cable (8) free from intermediate electrical interruptions as determined by sliding contacts between the extremities (2, 10), one of which mounting an unhindered plug and the other secured to a fixed structure, such as could be that of an electrical appliance. Electrical continuity is maintained in spite of the rotation of a take-up reel (1), with the winding action starting from the free end equipped with the plug attachment (2).

2. Cable-winder as described at point 1 above, is characterised by a device that holds fast the free end of the cable mounting plug (2) onto the reel (1) which gets dragged by means of plug (2) placed inside a slot (1B) present on hub (1A) of reel (1).

3. Cable-winder as described at points 1 and 2 above, is characterised by on automatic winding mechanism realised by exploiting the action of a spiral flat spring (3) preloaded by the rotation of reel (1) implemented by the forced unwinding of cable (8). The energy stored in the spring is maintained by preventing movement through a non-return friction sensitive mechanism (11), releasable by means of the appropriate mechanism (11D - 12).

4. Cable-winder as described at points 1, 2 and 3 above, is characterised by a progressive positioning non-return mechanism (11) realised through the self-wedging, action of a roller (11A). Said roller, indirectly assisted by a leaf spring, is made to bear upon a cylindrical rim (1C) having the surface optimized to increase frictional contact with the roller itself. The bidirectional movement of the roller, induced by the rotation of a take-up reel (1), causes the roller to move along a slot (11C) machined into one arm of a supporting lever (11D) and thus come to bear upon an inclined plane (11G) causing itself to become wedged between the plane (11G) and the cylindrical rim (10 - 10') of the reel (1) with the result of retaining the angular position acquired during the previous rotation in the opposite direction.

5. Cable-winder as described at joint 4 above, is characterised by a friction sensitive mechanism (11), releasable through a plunger (12) acting on the extremity of a first class lever (11D) mounting on its opposite extremity the self-wedging, slot-traversing roller (11A).

6. Cable-winder as described at point 5 above, is characterised by a first class lever (11D) withheld upon the fixed structure (5) by means of two retaining pawls (11H - 11H') captive and sliding inside two slots (11L - 11L') concentric to the lever pivoting fulcrum (11E) the dimensions of which determine the amplitude of the oscillations of the lever.

Fig.1

Fig.2

EP 0 488 074 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 430 402 (PROGRESS-ELEKTROGERÄTE MAUZ & PFEIFFER) * page 11, last paragraph - page 15, line 1; figures 1-2A * | 1,2 | H02G11/02 B65H75/44 A47L9/26 |
| X A | DE-U-8 322 794 (ATLANTA-KABEL-STEINMÜLLER) * the whole document * | 1,3-5 6 | |
| X A | DE-U-8 208 914 (SIEMENS) * page 3, line 9 - page 4, line 13; figures 1-3 * | 1,3-5 6 | |

TECHNICAL FIELDS SEARCHED (Int. Cl.5)

H02G
B65H
A47L

The present search report has been drawn up for all claims

| Place of search | Date of completion of the search | Examiner |
|---|---|---|
| THE HAGUE | 25 FEBRUARY 1992 | LOMMEL A. |

EPO FORM 1503 03.82 (P0401)